# FASCICULE DE BREVET EUROPEEN

(11) **EP 0 887 903 B1**
(45) Date de publication et mention de la délivrance du brevet: **28.08.2002**
(21) Numéro de dépôt: 98401575.0
(22) Date de dépôt: 25.06.1998
(51) Int. Cl.: H02G 3/04

(54) **Socle de goulotte, notamment pour goulotte à profil en V à disposer dans une encoignure ou pour goulotte à encastrer**
Sockel für Kabelkanal mit einem V-förmigen Querschnitt, insbesondere Eckkanal oder Unterputzkanal
V-shaped raceway base for corner or flush mounting

(30) Priorité: 27.06.1997 FR 9708095
(43) Date de publication de la demande: 30.12.1998
(73) Titulaire: LEGRAND, F-87000 Limoges (FR); LEGRAND SNC, F-87000 Limoges (FR)
(72) Inventeur: Buard, Yvon, 53600 Voutre (FR)
(74) Mandataire: CABINET BONNET-THIRION

(56) Documents cités:
- EP-A- 0 600 108
- FR-A- 2 593 973

## Description

La présente invention concerne d'une manière générale les goulottes du type de celles mises en oeuvre, par exemple, pour le support, le logement et la protection de divers appareillages, et, en particulier de divers appareillages électriques, aussi bien que pour le support, le logement et la protection des conducteurs ou des canalisations nécessaires à la desserte de ces appareillages.

Ainsi qu'on le sait, une goulotte présente, par définition, un socle, de section transversale ouverte, par lequel se fait sa fixation, et un couvercle, qui, pour la fermeture de ce socle, est à rapporter de manière amovible sur celui-ci.

La présente invention vise plus particulièrement, mais non exclusivement, le cas où, étant destinée à être disposée dans une encoignure, une telle goulotte, et, plus précisément son socle, ont globalement, en section transversale, un profil en V.

Cela est notamment le cas des goulottes destinées à être implantées en corniche au raccordement d'un mur et d'un plafond, et cela est également le cas de celles destinées à former un pan coupé au raccordement de deux murs.

La présente invention vise également le cas des goulottes à encastrer, quel que soit le profil de la section transversale de celles-ci.

D'une manière générale, le socle d'une goulotte comporte plusieurs parois, et l'une au moins de celles-ci est une paroi d'appui, qui, destinée à s'appliquer contre une quelconque surface d'appui, comporte une zone d'appui par la surface externe de laquelle elle est effectivement apte à porter sur une telle surface d'appui.

Pour une goulotte à profil en V destinée à être disposée dans une encoignure, le socle comporte ainsi en V deux parois d'appui, qui sont en pratique ses parois latérales.

L'angle du dièdre que forment entre elles ces deux parois d'appui est à ce jour normalement sensiblement égal à 90°.

De même, pour une goulotte à encastrer, le socle comporte au moins une paroi d'appui, et, par exemple, deux parois d'appui qui doivent naturellement venir en appui contre les surfaces d'appui que constituent à son égard les flancs de la rainure dans laquelle il doit être engagé.

D'une manière générale, également, la mise en place d'un couvercle sur le socle d'une goulotte implique un certain emboîtement de ce couvercle sur ce socle, et il en est fréquemment de même de tout éventuel accessoire, par exemple un support d'appareillage, à substituer localement à un tel couvercle.

En pratique, cette mise en place se fait à la faveur des parois latérales du socle, ou de retours que celles-ci comportent à cet effet en direction l'une de l'autre.

Elle implique en général une déformation élastique temporaire de ces parois latérales.

Quoi qu'il en soit, chacune de celles-ci comporte une zone d'emboîtement par laquelle elle est apte à recevoir pour sa part le couvercle ou l'accessoire concerné.

Le plus souvent, cette zone d'emboîtement s'étend librement en porte à faux à compter de la zone d'appui, en continuité avec celle-ci.

D'une des parois latérales à l'autre, les zones d'emboîtement définissent l'une avec l'autre une ouverture dont la largeur est, au repos, bien déterminée, et le couvercle ou accessoire concerné est dûment adapté à celle-ci.

L'une des difficultés, en la matière, lorsque la goulotte est une goulotte à profil en V à disposer dans une encoignure ou une goulotte à encastrer, mais cette difficulté peut également se retrouver pour d'autres goulottes et/ou dans d'autres circonstances, tient à ce que, dans un tel cas, les parois latérales du socle en constituent également les parois d'appui.

En effet, dûment appliquées contre les surfaces d'appui correspondantes, ces parois latérales forment alors entre elles un dièdre, qui n'est plus nécessairement celui qu'elles forment au repos, mais qui est celui que forment entre elles ces surfaces d'appui.

Or, eu égard aux inévitables tolérances de réalisation en construction, il n'est pas rare, pour une goulotte à profil en V à disposer dans une encoignure, que ce dièdre soit différent de 90°.

De même, il n'est pas rare que, d'une réalisation à une autre, les rainures dans lesquelles doivent être disposées des goulottes à encastrer présentent des variations de dimensions.

Il n'est donc pas rare que la valeur de la largeur de l'ouverture que forment entre elles les zones d'emboîtement du socle soit elle-même différente de sa valeur au repos.

La mise en place, sur le socle, du couvercle ou de l'accessoire concerné peut dès lors s'avérer malaisée, voire même impossible, et, lorsqu'elle est possible, elle peut conduire à un ajustement imparfait de ce couvercle ou de cet accessoire sur ce socle, au détriment de l'esthétique de l'ensemble.

La présente invention a d'une manière générale pour objet une disposition permettant de surmonter de manière simple et efficace cette difficulté et conduisant en outre avantageusement à une protection plus sûre contre la pénétration éventuelle de corps solides et/ou de liquides.

De manière plus précise, elle a pour objet un socle de goulotte, du genre comportant, d'une manière générale, au moins une paroi d'appui, qui, destinée à s'appliquer contre une quelconque surface d'appui, comporte, d'une part, une zone d'appui, par la surface externe de laquelle elle est apte à porter sur une telle surface d'appui, et, d'autre part, une zone d'emboîtement, qui s'étend librement à compter de la zone d'appui, et par laquelle elle est apte à recevoir pour sa part un couvercle ou un quelconque accessoire, ce socle de goulotte étant, d'une manière également générale, caractérisé en ce que, pour disposer d'une capacité de jeu élastique par rapport à sa zone d'appui, la zone d'emboîtement a, au moins à son raccordement à la zone d'appui, une épaisseur moindre que celle de cette zone d'appui, et sa surface externe se situe en retrait par rapport à celle de cette dernière.

La capacité de jeu élastique dont la zone d'emboîtement dispose ainsi suivant l'invention par rapport à la zone d'appui permet avantageusement à l'ensemble de se satisfaire d'éventuelles discordances entre la largeur du couvercle ou de l'accessoire et celle de l'ouverture dans laquelle ce couvercle ou cet accessoire doit être emboîté.

Certes, la demande de brevet européen No 0 600 108 fait état d'une éventuelle tolérance en ce qui concerne l'angle, normalement de 90°, que font entre elles les surfaces d'appui sur lesquelles le socle de goulotte doit venir s'appliquer, mais il n'y est prévu aucune disposition spécifique pour favoriser la capacité de jeu élastique que doivent présenter les parois d'appui correspondantes de ce socle de goulotte pour son adaptation à un tel angle.

Corollairement, si, dans la demande de brevet français No 2 593 973, les zones d'emboîtement prévues pour le couvercle s'étendent bien librement à compter de la zone d'appui du socle de goulotte correspondant, ces zones d'emboîtement ne concernent en rien cette zone d'appui.

Préférentiellement, lorsque, pour être disposé dans une encoignure, le socle de goulotte suivant l'invention comporte, en V, deux parois d'appui, l'angle du dièdre que forment au repos entre elles ces deux parois d'appui est légèrement différent de 90°.

Par exemple, lorsque la zone d'emboîtement d'une paroi d'appui comporte, en saillie, pour l'encliquetage d'un couvercle, un épaulement qui, de sa racine à son extrémité libre, s'étend vers l'intérieur, l'angle de ce dièdre est légèrement supérieur à 90°.

En variante, lorsque cet épaulement s'étend vers l'extérieur, il est légèrement inférieur à 90°.

Ainsi, le socle de goulotte suivant l'invention est avantageusement apte à satisfaire à toutes les situations, que les surfaces d'appui de l'encoignure dans laquelle il doit être rapporté fassent entre elles un dièdre d'angle supérieur à 90°, ou qu'elles fassent entre elles un dièdre d'angle égal à 90° ou légèrement inférieur à 90°.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un socle de goulotte suivant l'invention, auquel il est associé, de manière éclatée, un premier type de couvercle ;
la figure 2 est, à échelle supérieure, une vue de bout de ce socle de goulotte, représenté isolément, suivant la flèche II de la figure 1 ;
la figure 3 reprend, à échelle supérieure, le détail de la figure 2 repéré par un encart III sur cette figure 2 ;
la figure 4 est une vue de bout, qui, analogue à celle de la figure 2, représente ce socle de goulotte en place dans une encoignure, avec, dûment rapporté par emboîtement, le couvercle qui lui est associé ;
la figure 5 reprend, à l'échelle de celle de la figure 3, et à la manière de celle-ci, le détail de la figure 4 repéré par un encart V sur cette figure 4 ;
la figure 6 est une vue en perspective qui, à l'échelle de celle de la figure 1, et à la manière de celle-ci, se rapporte à un deuxième type de couvercle.
la figure 7 est une vue partielle de bout, qui, analogue à celle de la figure 5, se rapporte à une variante de réalisation du socle de goulotte suivant l'invention ;
la figure 8 est une vue partielle de bout se rapportant à une variante de réalisation du couvercle à rapporter sur ce socle de goulotte ;
la figure 9 est une vue partielle de bout se rapportant à une autre variante de réalisation de ce socle de goulotte et de ce couvercle.

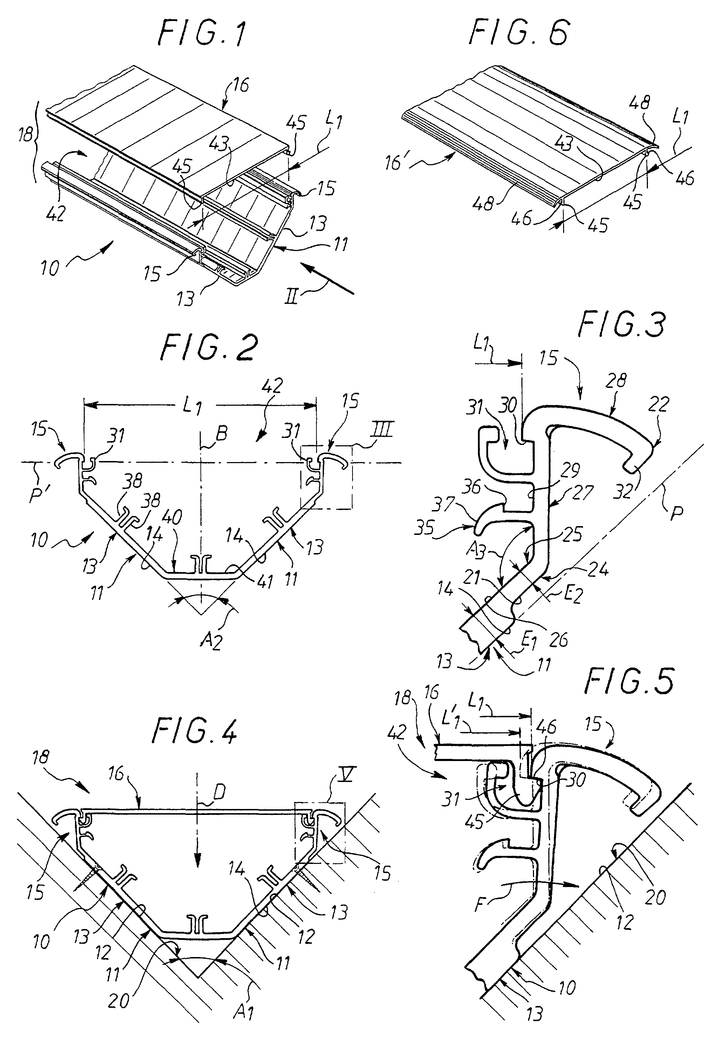

Tel qu'illustré sur ces figures, et de manière connue en soi, le socle de goulotte 10 suivant l'invention comporte, globalement, au moins une paroi d'appui 11, qui, destinée à s'appliquer contre une quelconque surface d'appui 12, tel que représenté sur les figures 4 et 5, comporte, d'une part, une zone d'appui 13, par la surface externe 14 de laquelle elle est apte à porter sur une telle surface d'appui 12, et, d'autre part, une zone d'emboîtement 15, qui s'étend librement à compter de la zone d'appui 13, en continuité avec celle-ci, et par laquelle elle est apte à recevoir, pour sa part, par emboîtement, un couvercle 16, 16' ou un quelconque accessoire, non représenté, à substituer localement à celui-ci.

Ce socle de goulotte 10, dont la section transversale est ouverte, constitue, avec le couvercle 16, 16' qui est destiné à le fermer, une goulotte 18.

Dans les formes de mise en oeuvre plus particulièrement représentées, à titre d'exemple, sur les figures 1 à 9, cette goulotte 18 est destinée à être implantée dans une encoignure 20 constituée de deux surfaces d'appui 12 formant entre elles un dièdre.

Ces deux surfaces d'appui 12 peuvent par exemple être chacune formées par un mur.

Mais, en variante, l'une d'elles peut également être formée par un mur tandis que l'autre est formée par un plafond.

Soit A1 l'angle du dièdre que forment entre elles ces deux surfaces d'appui 12.

Normalement égal à 90°, cet angle A1 peut être légèrement supérieur ou inférieur à 90°.

Sur la figure 4, il a été supposé, à titre d'exemple, qu'il était légèrement inférieur à 90°.

Quoi qu'il en soit, les surfaces d'appui 12 sont normalement l'une et l'autre planes.

Il n'en est toutefois pas nécessairement ainsi, ces surfaces d'appui 12 pouvant par exemple être plus ou moins bombées.

Pour s'adapter à une telle encoignure 20, le socle de goulotte 10 suivant l'invention comporte, de manière connue en soi, en V, à la manière des deux surfaces d'appui 12 formant cette encoignure 20, deux parois d'appui 11.

Soit A2 l'angle du dièdre que forment entre elles au repos ces deux parois d'appui 11, tel que représenté sur la figure 2.

Dans la forme de réalisation représentée, la zone d'appui 13 de chacune des parois d'appui 11 a une épaisseur E1 sensiblement uniforme.

Suivant l'invention, la zone d'emboîtement 15 de l'une au moins des parois d'appui 11, et, préférentiellement, celle de chacune de celles-ci, dispose d'une capacité de jeu élastique par rapport à la zone d'appui 13 à laquelle elle fait suite.

Par exemple, et tel que représenté, la zone d'emboîtement 15 a, au moins à son raccordement à la zone d'appui 13, une épaisseur E2 moindre que celle E1 de cette zone d'appui 13, et sa surface externe 21 se situe en retrait par rapport à celle 14 de cette dernière.

Dans la forme de réalisation représentée, la surface externe 14 de la zone d'appui 13 est sensiblement plane, et, tel que schématisé en traits interrompus sur la figure 3, la zone d'emboîtement 15 s'étend tout entière en retrait par rapport au plan P correspondant, y compris le long de son bord libre 22.

Pour chacune des parois d'appui 11, la zone d'emboîtement 15 comporte, dans la forme de réalisation représentée, un premier pan 24, dont la surface interne 25 est, dans la forme de réalisation représentée, en continuité avec celle 26 de la zone d'appui 13, un deuxième pan 27, qui fait avec le premier pan 24 un dièdre dont l'angle A3 est obtus.

Dans la forme de réalisation représentée, la zone d'emboîtement 15 comporte un troisième pan 28, qui, par rapport au deuxième pan 27, forme globalement un retour dirigé vers l'extérieur.

Par exemple, et tel que schématisé en traits interrompus sur la figure 2, le deuxième pan 27 est sensiblement parallèle au plan bissecteur B des deux parois d'appui 11.

Pour l'encliquetage d'un couvercle 16, 16', la zone d'emboîtement 15 d'une paroi d'appui 11 comporte, en saillie, un épaulement 30.

Dans la forme de réalisation représentée sur les figures 1 à 5, cet épaulement 30 est en saillie sur la surface interne 29 du deuxième pan 27 de la zone d'emboîtement 15, au voisinage du troisième pan 28, et, de sa racine vers son extrémité libre, il s'étend vers l'intérieur.

Au droit de cet épaulement 30, la zone d'emboîtement 15 forme, en saillie vers l'intérieur, une gouttière 31.

Dans la forme de réalisation représentée, le troisième pan 28 de la zone d'emboîtement 15 est arrondi, avec une concavité orientée vers la zone d'appui 13.

Le long de son bord libre 22, ce troisième pan 28 de la zone d'emboîtement 15 comporte, dans la forme de réalisation représentée, un retour 32, qui, dirigé vers la zone d'appui 13, est, au moins à sa naissance, sensiblement perpendiculaire à ce troisième pan 28.

Préférentiellement, et cela est le cas dans la forme de réalisation représentée, un jeu suffisant est prévu entre le bord libre 22 du troisième pan 28 de la zone d'emboîtement 15 et le plan P, et, donc, entre le retour 32 et ce plan P, pour qu'en aucune circonstance cette zone d'emboîtement 15 n'interfère avec ce dernier.

Autrement dit, le retour 32 du troisième pan 28 de la zone d'emboîtement 15 est en retrait par rapport à la surface externe 14 de la zone d'appui 13.

Prise dans son ensemble, la zone d'emboîtement 15 s'étend globalement en porte à faux par rapport à la zone d'appui 13, et ses trois pans 24, 27 et 28 ont sensiblement la même épaisseur E2.

Autrement dit, comme la zone d'appui 13, la zone d'emboîtement 15 a une épaisseur E2 sensiblement uniforme, inférieure à celle E1 de cette zone d'appui 13.

Pour des raisons qui, ne relevant pas de la présente invention, ne seront pas explicitées ici, le deuxième pan 27 de la zone d'emboîtement 15 comporte, en saillie sur sa surface interne 29, en dessous de la gouttière 31, dans la forme de réalisation représentée, une nervure 35 qui, du côté de la gouttière 31, présente, parallèlement à ce deuxième pan 27, un épaulement 36 précédé par une surface arrondie d'engagement 37.

De même, dans la forme de réalisation représentée, la zone d'appui 13 présente, en saillie sur sa surface interne 25, dans la zone médiane de celle-ci, deux nervures 38, qui, parallèles l'une à l'autre, à distance l'une de l'autre, ont chacune un profil en équerre et sont globalement orientées dos à dos.

Dans la forme de réalisation représentée, enfin, le socle de goulotte 10 suivant l'invention comporte un fond 40, qui, perpendiculaire au plan bissecteur B de ses deux parois d'appui 11, s'étend en pan coupé de l'une à l'autre de celles-ci, et qui présente, en saillie sur sa surface interne 41, dans la zone médiane de celle-ci, deux nervures 38 analogues à celles de la zone d'appui 13 des parois d'appui 11.

En pratique, le plan bissecteur B des deux parois d'appui 11 est un plan de symétrie pour l'ensemble du socle de goulotte 10 suivant l'invention, les deux parois d'appui 11 de ce socle de goulotte 10 étant identiques l'une à l'autre, tant en ce qui concerne leur zone d'appui 13 qu'en ce qui concerne leur zone d'emboîtement 15.

Suivant l'invention, l'angle A2 du dièdre que forment au repos ces deux parois d'appui 11 est légèrement supérieur à 90°.

Dans la forme de réalisation représentée sur les figures 1 à 5, cet angle A2 est, en pratique, légèrement différent de 90°.

Par exemple, il est de l'ordre de 92°, sans que cette valeur numérique doive être considérée comme limitative de l'invention.

Soit, par ailleurs, L1, appréciée transversalement au droit des gouttières 31, à l'extrémité des épaulements 30, la largeur de l'ouverture 42 que ménagent entre elles les deux parois d'appui 11 de l'une à l'autre de leurs zones d'emboîtement 15 respectives, dite, ci-après, par simple commodité, largeur au repos, avant la fixation du socle de goulotte 10 aux surfaces d'appui 12, et avant l'emboîtement d'un couvercle 16, 16' sur ce socle de goulotte 10, tel que représenté sur les figures 2 et 3.

Tel que représenté respectivement sur les figures 1, 6, le couvercle 16, 16' à emboîter sur le socle de goulotte 10 présente, en saillie sur sa surface inférieure 43, deux nervures 45, qui, parallèles l'une à l'autre, sont à une distance l'une de l'autre sensiblement égale à la largeur L1 précédente, et qui, pour coopérer en crochetage avec l'épaulement 30 correspondant du socle de goulotte 10, comportent chacune elles-mêmes un épaulement 46.

Dans la forme de réalisation représentée sur les figures 1 à 5, le couvercle 16 ne s'étend sensiblement pas au-delà de ses nervures 45.

Lorsque, comme représenté à la figure 4, le socle de goulotte 10 suivant l'invention est implanté dans l'encoignure 20, et que, tel que schématisé en traits interrompus sur cette figure 4, ses parois d'appui 11 sont appliquées, et assujetties, aux surfaces d'appui 12 correspondantes, par de quelconques moyens de fixation 47, par exemple des vis, le dièdre que forment ces parois d'appui 11 se referme légèrement, pour s'adapter à celui formé par les surfaces d'appui 12.

Tel que schématisé en traits interrompus sur la figure 5, l'ouverture 42 que forment les parois d'appui 11 de ce socle de goulotte 10 a, transversalement, une largeur L'1 inférieure à sa largeur L1 au repos, et, donc, inférieure à la largeur L1 séparant l'une de l'autre les deux nervures 45 du couvercle 16.

Mais, grâce à la capacité de jeu élastique prévue suivant l'invention entre les zones d'emboîtement 15 des parois d'appui 11 et leurs zones d'appui 13, et tel que schématisé en traits interrompus sur la figure 5, ce couvercle 16 peut alors très simplement refouler élastiquement vers l'extérieur les zones d'emboîtement 15 lors de son'engagement dans la gouttière 31 de celles-ci, tel que schématisé par la flèche F sur la figure 5 pour celle des zones d'emboîtement 15 qui est représentée sur celle-ci.

Dans la forme de réalisation représentée, tout se passe comme si, prises dans leur ensemble, ces zones d'emboîtement 15 basculaient vers l'extérieur par rapport aux zones d'appui 13, par pivotement autour de leur raccordement à celles-ci.

Quoi qu'il en soit, malgré que l'angle A1 ne soit pas un angle droit, le couvercle 16 peut encore s'ajuster simplement, et correctement, au socle de goulotte 10, grâce à la disposition suivant l'invention.

Comme indiqué ci-dessus, le deuxième pan 27 de la zone d'emboîtement 15 d'une paroi d'appui 11 d'un socle de goulotte 10 suivant l'invention est sensiblement parallèle au plan bissecteur B des deux parois d'appui 11 de celui-ci.

D'une manière plus générale, ce deuxième pan 27 est sensiblement perpendiculaire à un plan P' passant par la zone médiane de la gouttière 31 d'une des parois d'appui 11 et par la zone médiane de la gouttière 31 de l'autre de celles-ci, tel que schématisé en traits interrompus par sa trace sur la figure 2.

Autrement dit, ce deuxième pan 27 est sensiblement parallèle à la direction d'encliquetage D du couvercle 16, 16'.

Cette direction d'encliquetage D est schématisée en traits interrompus sur la figure 4.

Dans la forme de réalisation représentée sur la figure 6, le couvercle 16' comporte, transversalement, au-delà de ses nervures 45, des prolongements 48 par lesquels il est apte à coiffer par dessus le troisième pan 28 de la zone d'emboîtement 15 des parois d'appui 11 du socle de goulotte 10.

Pour le reste, les dispositions sont de même type que les précédentes.

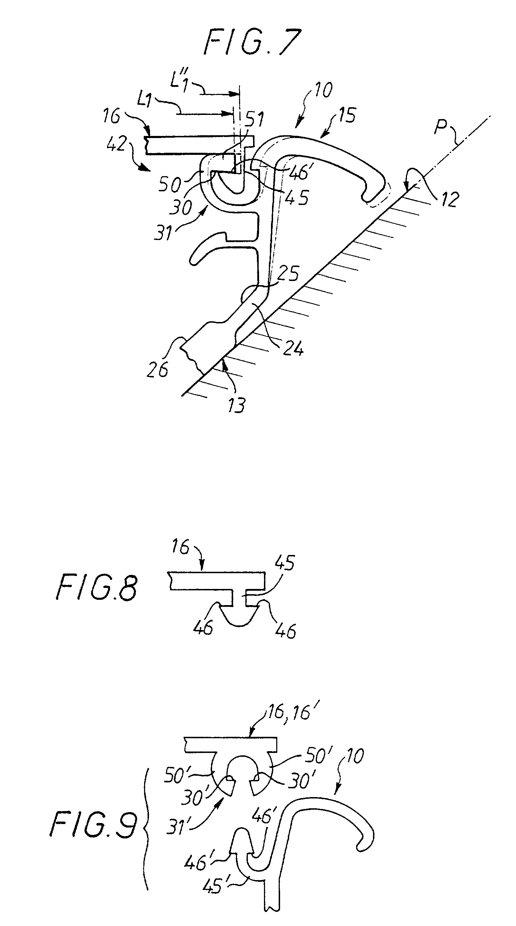

Dans la variante de réalisation représentée sur la figure 7, l'épaulement 30 que la zone d'emboîtement 15 d'une paroi d'appui 11 comporte en saillie pour l'encliquetage d'un couvercle 16, 16' s'étend, de sa racine à son extrémité libre, vers l'extérieur.

L'angle A2 du dièdre, non visible sur la figure 7, que forment au repos les deux parois d'appui 11, comme défini précédemment, est alors légèrement inférieur à 90°.

Il est par exemple de l'ordre de 88°.

En pratique, l'épaulement 30 fait alors saillie sur l'aile libre 50 de la gouttière 31, à la faveur d'un retour en équerre 51 de celle-ci dirigé vers l'extérieur.

Corollairement, au lieu d'être dirigé vers l'extérieur, l'épaulement 46 de la nervure 45 que présente en correspondance un couvercle 16, 16' s'étend vers l'intérieur.

Par ailleurs, dans la forme de réalisation représentée sur la figure 7, au lieu d'être en continuité avec la surface interne 26 de la zone d'appui 13, la surface interne 25 du premier pan 24 de la zone d'emboîtement 15 est légèrement en retrait par rapport à cette surface interne 26.

Lorsque le socle de goulotte 10 suivant l'invention est fixé à des surfaces d'appui 12, l'ouverture 42 que forment ses parois d'appui 11 a, transversalement, dans cette variante de réalisation, une largeur L"1 supérieure à sa largeur L1 au repos, et, donc, supérieure à la largeur L1 séparant l'une de l'autre les deux nervures 45 d'un couvercle 16, 16'.

Lors de son emboîtement sur le socle de goulotte 10, ce couvercle 16, 16' exerce dès lors une traction sur les deux zones d'emboîtement 15 sur lesquelles il s'engage, en rapprochant celles-ci l'une de l'autre, et, donc, en écartant chacune d'elles de la surface d'appui 12 correspondante, tel que schématisé en traits interrompus et continus pour l'une d'elles sur la figure 7.

Dans la variante de réalisation représentée sur la figure 8, chacune des nervures 45 d'un couvercle 16' comporte, dos à dos, deux épaulements 46, pour satisfaire indifféremment à l'une ou l'autre des deux situations précédentes.

Dans la variante de réalisation représentée sur la figure 9, des dispositions inverses de celles décrites ci-dessus sont prévues, le socle de goulotte 10 comportant une nervure 45' avec deux épaulements 46' disposés dos à dos, tandis que le couvercle 16, 16' comporte une gouttière 31', par laquelle il peut être engagé sur la nervure 45' du socle de goulotte 10, et qui, sur l'une et l'autre de deux ailes libres 50', comporte, en saillie vers l'intérieur, un épaulement 30'.

Bien entendu, la présente invention ne se limite pas aux formes de réalisation décrites et représentées, mais englobe toute variante d'exécution, dans les limites des revendications.

En outre, le domaine d'application de l'invention ne se limite pas à celui des seules goulottes à implanter dans une encoignure ou à encastrer, comme plus particulièrement décrit et représenté, mais s'étend au contraire à toutes les goulottes dont le socle de goulotte comporte au moins une paroi d'appui destinée à s'appliquer contre une quelconque surface d'appui et propre à recevoir par emboîtement un couvercle ou un quelconque accessoire.

En particulier, elle s'étend au cas des goulottes à encastrer, c'est-à-dire au cas où le socle de goulotte d'une telle goulotte est à loger dans une rainure formant au moins localement pour lui des surfaces d'appui.

## Revendications

1. Socle de goulotte, du genre comportant au moins une paroi d'appui (11), qui, destinée à s'appliquer contre une quelconque surface d'appui (12), comporte, d'une part, une zone d'appui (13), par la surface externe (14) de laquelle elle est apte à porter sur une telle surface d'appui (12), et, d'autre part, une zone d'emboîtement (15), qui s'étend librement à compter de la zone d'appui (13), et par laquelle elle est apte à recevoir pour sa part un couvercle (16, 16') ou un quelconque accessoire, **caractérisé en ce que**, pour disposer d'une capacité de jeu élastique par rapport à sa zone d'appui (13), la zone d'emboîtement (15) a, au moins à son raccordement à la zone d'appui (13), une épaisseur (E2) moindre que celle (E1) de cette zone d'appui (13), et sa surface externe (21) se situe en retrait par rapport à celle (14) de cette dernière.

2. Socle de goulotte suivant la revendication 1, **caractérisé en ce que**, la surface externe (14) de la zone d'appui (13) étant sensiblement plane, la zone d'emboîtement (15) s'étend tout entière en retrait par rapport au plan (P) correspondant, y compris le long de son bord libre (22).

3. Socle de goulotte suivant l'une quelconque des revendications 1, 2, et comportant en (V) deux parois d'appui (11), **caractérisé en ce que** l'angle (A2) du dièdre que forment au repos ces deux parois d'appui (11) est légèrement différent de 90°.

4. Socle de goulotte suivant la revendication 3, **caractérisé en ce que**, la zone d'emboîtement (15) d'une paroi d'appui (11) comportant, en saillie, pour l'encliquetage d'un couvercle (16, 16'), un épaulement (30) qui, de sa racine à son extrémité libre,'s'étend vers l'intérieur, l'angle (A2) du dièdre que forment au repos les deux parois d'appui (11) est légèrement supérieur à 90°.

5. Socle de goulotte suivant la revendication 3, **caractérisé en ce que** la zone d'emboîtement (15) d'une paroi d'appui (11) comportant, en saillie, pour l'encliquetage d'un couvercle (16, 16'), un épaulement (30) qui, de sa racine à son extrémité libre, s'étend vers l'extérieur, l'angle (A2) du dièdre que forment au repos les deux parois d'appui (11) est légèrement inférieur à 90°.

6. Socle de goulotte suivant l'une quelconque des revendications 3 à 5, **caractérisé en ce que**, pour chacune des parois d'appui (11), la zone d'emboîtement (15) comporte un premier pan (24) et un deuxième pan (27), qui fait avec le premier pan (24) un dièdre dont l'angle (A3) est obtus.

7. Socle de goulotte suivant la revendication 6, **caractérisé en ce que**, la zone d'emboîtement (15) de chacune des parois d'appui (11) formant une gouttière (31) pour recevoir un couvercle (16, 16'), le deuxième pan (27) de cette zone d'emboîtement (15) est sensiblement perpendiculaire à un plan (P') passant par la zone médiane de la gouttière (31) d'une de ces parois d'appui (11) et par la zone médiane de la gouttière (31) de l'autre de celles-ci.

8. Socle de goulotte suivant les revendications 4 et 6, prises conjointement, **caractérisé en ce que** l'épaulement (30) fait saillie sur la surface interne (29) du deuxième pan (27) de la zone d'emboîtement (15).

9. Socle de goulotte suivant la revendication 8, **caractérisé en ce que**, au droit de l'épaulement (30) que comporte son deuxième pan (27), la zone d'emboîtement (15) forme une gouttière (31).

10. Socle de goulotte suivant la revendication 5, **caractérisé en ce que**, la zone d'emboîtement (15) formant, en saillie vers l'intérieur, une gouttière (31), l'épaulement (30) fait saillie sur l'aile libre (50) de cette gouttière (31).

11. Socle de goulotte suivant l'une quelconque des revendications 6 à 10, **caractérisé en ce que**, pour chacune des parois d'appui (11), la surface interne (25) du premier pan (24) de la zone d'emboîtement (15) est en continuité avec celle (26) de la zone d'appui (13).

12. Socle de goulotte suivant l'une quelconque des revendications 6 à 11, **caractérisé en ce que**, pour chacune des parois d'appui (11), la zone d'emboîtement (15) comporte un troisième pan (28), qui, par rapport au deuxième pan (27), forme un retour dirigé vers l'extérieur.

13. Socle de goulotte suivant la revendication 12, **caractérisé en ce que** le troisième pan (28) de la zone d'emboîtement (15) est arrondi, avec une concavité orientée vers la zone d'appui (13).

14. Socle de goulotte suivant l'une quelconque des revendications 12, 13, **caractérisé en ce que**, le long de son bord libre (22), le troisième pan (28) de la zone d'emboîtement (15) comporte un retour (32) dirigé vers la zone d'appui (13).

15. Socle de goulotte suivant l'une quelconque des revendications 12 à 14, **caractérisé en ce que** le retour (32) du troisième pan (28) de la zone d'emboîtement (15) est en retrait par rapport à la surface externe (14) de la zone d'appui (13).

16. Socle de goulotte suivant l'une quelconque des revendications 12 à 15, **caractérisé en ce que** les trois pans (24, 27, 28) de la zone d'emboîtement (15) ont tous sensiblement la même épaisseur (E2).

## Patentansprüche

1. Kabelkanalsockel, der mindestens eine Aùflagewand (11) besitzt, die dazu bestimmt ist, an einer beliebigen Auflagefläche (12) anzuliegen, und einerseits einen Auflagebereich (13), über dessen Außenfläche (14) sie auf einer solchen Auflagefläche (12) aufliegen kann, und andererseits einen Einsteckbereich (15) aufweist, der sich von dem Auflagebereich (13) aus frei erstreckt und mit dem sie ihrerseits einen Deckel (16,16') oder ein beliebiges Zubehör aufnehmen kann, **dadurch gekennzeichnet, dass** der Einsteckbereich (15), um über eine Fähigkeit eines elastischen Spiels gegenüber seinem Auflagebereich (13) zu verfügen, mindestens an seiner Verbindung mit dem Auflagebereich (13) eine Dicke (E2) besitzt, die kleiner als die Dicke (E1) dieses Auflagebereichs (13) ist, und seine Außenfläche (21) bezüglich der Außenfläche (14) dieses Auflagebereichs zurückversetzt ist.

2. Kabelkanalsockel nach Anspruch 1, **dadurch gekennzeichnet, dass** die Außenfläche (14) des Auflagebereichs (13) im wesentlichen eben ist und dass der Einsteckbereich (15) sich gänzlich bezüglich der entsprechenden Ebene (P) zurückversetzt erstreckt, und zwar einschließlich entlang seines freien Randes (22).

3. Kabelkanalsockel nach einem der Ansprüche 1, 2 mit zwei V-förmig angeordneten Auflagewänden (11), **dadurch gekennzeichnet, dass** der Winkel (A2) des Dieders, das diese beiden Auflagewände (11) im Ruhezustand bilden, von 90° leicht abweicht.

4. Kabelkanalsockel nach Anspruch 3, **dadurch gekennzeichnet, dass** der Einsteckbereich (15) einer Auflagewand (11) zum Einrasten eines Deckels (16,16') vorstehend eine Schulter (30) aufweist, die von ihrer Wurzel zu ihrem freien Ende sich nach innen erstreckt, wobei der Winkel (A2) des Dieders, das die beiden Auflagewände (11) im Ruhezustand bilden, etwas größer als 90° ist.

5. Kabelkanalsockel nach Anspruch 3, **dadurch gekennzeichnet, dass** der Einsteckbereich (15) einer Auflagewand (11) zum Einrasten eines Deckels (16,16') vorstehend eine Schulter (30) aufweist, die von ihrer Wurzel zu ihrem freien Ende sich nach außen erstreckt, wobei der Winkel (A2) des Dieders, das die beiden Auflagewände (11) im Ruhezustand bilden, etwas kleiner als 90° ist.

6. Kabelkanalsockel nach einem der Ansprüche 3 bis 5, **dadurch gekennzeichnet, dass** der Einsteckbereich (15) bei jeder der Auflagewände (11) eine erste Wange (24) und eine zweite Wange (27) aufweist, die mit der ersten Wange (24) ein Dieder bildet, dessen Winkel (A3) stumpf ist.

7. Kabelkanalsockel nach Anspruch 6, **dadurch gekennzeichnet, dass** der Einsteckbereich (15) jeder der Auflagewände (11) eine Rinne (31) zur Aufnahme eines Deckels (16,16') bildet und dass die zweite Wange (27) dieses Einsteckbereichs (15) im wesentlichen senkrecht zu einer Ebene (P') ist, die durch den Mittelbereich der Rinne (31) einer dieser Auflagewände (11) und durch den Mittelbereich der Rinne (31) der anderen von diesen gelegt ist.

8. Kabelkanalsockel nach den Ansprüchen 4 und 6 zusammen, **dadurch gekennzeichnet, dass** die Schulter (30) auf der Innenfläche (29) der zweiten Wange (27) des Einsteckbereichs (15) vorsteht.

9. Kabelkanalsockel nach Anspruch 8, **dadurch gekennzeichnet, dass** der Einsteckbereich (15) auf Höhe der Schulter (30), die seine zweite Wange (27) aufweist, eine Rinne (31) bildet.

10. Kabelkanalsockel nach Anspruch 5, **dadurch gekennzeichnet, dass** der Einsteckbereich (15) nach innen vorstehend eine Rinne (31) bildet und dass die Schulter (30) auf dem freien Schenkel (50) dieser Rinne (31) vorsteht.

11. Kabelkanalsockel nach einem der Ansprüche 6 bis 10, **dadurch gekennzeichnet, dass** die Innenfläche (25) der ersten Wange (24) des Einsteckbereichs (15) bei jeder der Auflagewände (11) an die Innenfläche (26) des Auflagebereichs (13) durchgängig anschließt.

12. Kabelkanalsockel nach einem der Ansprüche 6 bis 11, **dadurch gekennzeichnet, dass** der Einsteckbereich (15) bei jeder der Auflagewände (11) eine dritte Wange (28) aufweist, die bezüglich der zweiten Wange (27) eine nach außen gerichtete Abwinklung bildet.

13. Kabelkanalsockel nach Anspruch 12, **dadurch gekennzeichnet, dass** die dritte Wange (28) des Einsteckbereichs (15) mit einer dem Auflagebereich (13) zugewandten Konkavität abgerundet ist.

14. Kabelkanalsockel nach Anspruch 12, **dadurch gekennzeichnet, dass** die dritte Wange (28) des Einsteckbereichs (15) längs ihres freien Rands (22) eine auf den Auflagebereich (13) zu gerichtete Abwinklung (32) aufweist.

15. Kabelkanalsockel nach einem der Ansprüche 12 bis 14, **dadurch gekennzeichnet, dass** die Abwinklung (32) der dritten Wange (28) des Einsteckbereichs (15) bezüglich der Außenfläche (14) des Auflagebereichs (13) zurückversetzt ist.

16. Kabelkanalsockel nach einem der Ansprüche 12 bis 15, **dadurch gekennzeichnet, dass** die drei Wangen (24,27,28) des Einsteckbereichs (15) alle im wesentlichen dieselbe Dicke (E2) haben.

## Claims

1. A duct base of the kind comprising at least one support wall (11) which, being intended to be applied against any support surface (12), comprises on the one hand a support zone (13), by way of the external surface (14) of which it is capable of bearing against such a support surface (12), and, on the other hand, an interengagement zone (15) which extends freely from the support zone (13) and by way of which it is capable in turn of receiving a cover (16, 16') or any accessory, **characterised in that**, to afford a capacity for resilient motion with respect to its support zone (13), the interengagement zone (15), at least at its connection to the support zone (13), is of a width (E2) which is less than that (E1) of said support zone (13), and its external surface (21) is set back with respect to that (14) of the latter.

2. A duct base according to claim 1 **characterised in that**, the external surface (14) of the support zone (13) being substantially flat, the interengagement zone (15) extends entirely in set-back relationship with the corresponding plane (P), including along its free edge (22).

3. A duct base according to either one of claims 1 and 2 and comprising in a V two support walls (11) **characterised in that** the angle (A2) of the dihedron that is formed in the rest condition by the two support walls (11) is slightly different from 90°.

4. A duct base according to claim 3 **characterised in that**, the interengagement zone (15) of a support wall (11) comprising in projecting relationship for latching engagement of a cover (16, 16'), a shoulder (30) which, from its root to its free end, extends inwardly, the angle (A2) of the dihedron that is formed in the rest condition by the two support walls (11) is slightly greater than 90°.

5. A duct base according to claim 3 **characterised in that**, the interengagement zone (15) of a support wall (11) comprising in projecting relationship for latching engagement of a cover (16, 16'), a shoulder (30) which, from its root to its free end, extends outwardly, the angle (A2) of the dihedron that is formed in the rest condition by the two support walls (11) is slightly less than 90°.

6. A duct base according to any one of claims 3 to 5 **characterised in that**, for each of the support walls (11), the interengagement zone (15) comprises a first wall portion (24) and a second wall portion (27) which with the first wall portion (24) forms a dihedron whose angle (A3) is obtuse.

7. A duct base according to claim 6 **characterised in that**, the engagement zone (15) of each of the support walls (11) forming a channel (31) for receiving a cover (16, 16'), the second wall portion (27) of said interengagement zone (15) is substantially perpendicular to a plane (P') passing through the central zone of the channel (31) of one of said support walls (11) and the central zone of the channel (31) of the other thereof.

8. A duct base according to claims 4 and 6 in combination **characterised in that** the shoulder (30) projects on the internal surface (29) of the second wall portion (27) of the interengagement zone (15).

9. A duct base according to claim 8 **characterised in that**, in line with the shoulder (30) that its second wall portion (27) comprises, the interengagement zone (15) forms a channel (31).

10. A duct base according to claim 5 **characterised in that**, the interengagement zone (15) forming a channel (31) in inwardly projecting relationship, the shoulder (30) projects on the free limb (50) of said channel (31).

11. A duct base according to any one of claims 6 to 10 **characterised in that**, for each of the support walls (11), the internal surface (25) of the first wall portion (24) of the interengagement zone (15) is in continuous relationship with that (26) of the support zone (13).

12. A duct base according to any one of claims 6 to 11 **characterised in that**, for each of the support walls (11), the interengagement zone (15) comprises a third wall portion (28) which, with respect to the second wall portion (27), forms an outwardly directed flange portion.

13. A duct base according to claim 12 **characterised in that** the third wall portion (28) of the interengagement zone (15) is rounded, with a concavity oriented towards the support zone (13).

14. A duct base according to either one of claims 12 and 13 **characterised in that**, along its free edge (22), the third wall portion (28) of the interengagement zone (15) comprises a flange portion (32) directed towards the support zone (13).

15. A duct base according to any one of claims 12 to 15 **characterised in that** the flange portion (32) of the third wall portion (28) of the interengagement zone (15) is set back with respect to the external surface (14) of the support zone (13).

16. A duct base according to any one of claims 12 to 15 **characterised in that** the three wall portions (24, 27, 28) of the interengagement zone (15) are all substantially of the same thickness (E2).
